# EUROPEAN PATENT APPLICATION

(11) **EP 2 027 831 A1**
(43) Date of publication of application: **25.02.2009**
(21) Application number: 07114592.4
(22) Date of filing: 20.08.2007
(51) Int. Cl.: A61F 2/00, F03G 7/00, H01M 8/16

(54) **Apparatus for converting excess carbohydrates**

(71) Applicant: Fruitful Innovations BV, 3871 KM Hoevelaken (NL)
(72) Inventor: O'Connor, Paul, 3871 KM, Hoevelaken (NL)
(74) Representative: Rasser, Jacobus Cornelis

(57) **Abstract**

An apparatus is disclosed for converting excess carbohydrates present in body fluids of a mammal. The apparatus may be placed in the digestive tract of the mammal, or in contact with body fluids such as blood or lymph.

The apparatus comprises electrodes for converting monosaccharides to electric energy.

## Description

### Background of the invention

It is generally known that animals, such as mammals, have the capability of digesting complex, high molecular weight carbohydrates to smaller molecules, in particular monosaccharides. The body of the animal uses the monosaccharides as a source of energy. In mammals, the energy is consumed in large part in generating heat that is necessary to maintain the temperature of the body of the mammal, and for operation of the muscles. Of course, all functions of the body of a mammal require energy, including digestion itself.

The digestive tract is capable of digesting far more food than the body of the mammal requires. Excess energy is stored in the body in the form of fat. In case of need, fat is converted to monosaccharides. Because mammals are adapted to an environment in which periods of abundance are naturally interrupted by periods of shortage or even famine, their bodies are prone to accumulating fat. If periods of shortage fail to occur, for example as a result of the human invention of stockpiling, the mammal becomes overweight, or even obese.

Mankind has made various attempts at emulating the ability of a mammal's digestive system in order to extract energy from high molecular weight carbohydrates, such as starch and cellulose. Thus far man has failed to reach, or even approach, the level of effectiveness and sophistication present in the digestive tract of a mammal. It is therefore desirable to provide a method and apparatus capable of using the excess capacity of the digestive tract of a mammal in generating electric energy. Rather than harming the welfare of the mammal, such a method and apparatus will, in fact, benefit the mammal by reducing the risk of its becoming overweight or obese.

### Summary of the Invention

The present invention relates to an apparatus for converting carbohydrates in the body of a mammal, said apparatus comprising:
a) a pair of electrodes for placement in fluid contact with a body fluid comprising one or more monosaccharides;
b) electrical conduits for conducting electricity generated by said electrodes when in contact with said body fluid.

The invention further relates to a method for converting carbohydrates in the body of a mammal to electric energy, said method comprising the steps of:
a) bringing a pair of electrodes into contact with a body fluid comprising one or more monosaccharides whereby the electrodes generate electricity;
b) conducting the electricity away from the electrodes by means of electrical conduits.

The invention further relates to a method for preventing or alleviating obesity in a mammal, said method comprising the steps of:
a) converting food energy to electric energy inside the body of the mammal;
b) dissipating or using the electric energy.

### Detailed description of the invention.

In one aspect the invention relates to an apparatus for converting carbohydrates in the body of a mammal. In its basic configuration the apparatus comprises a pair of electrodes, and electrical conduits electrically connected to the electrodes. The electrodes are designed to generate electricity when put into contact with a liquid, such as an aqueous liquid, comprising a monosaccharide, such as glucose.

Electrodes of this type are known in the art. One class of electrodes makes use of enzymes that are affixed to a solid material having a large specific surface area. Another class of electrodes comprise a metal, such as gold, provided with a microstructure, or even a nanostructure, which imparts it with a high specific surface area.

Both types of electrode are suitable for use herein. The body of a mammal generally has a temperature that is at or near the optimum operating temperature of the enzymes present on the former type of electrode. Care should be exercised in selecting an enzyme that is compatible with the body fluids with which the electrodes will be contacted. Likewise, if a metal electrode is used, the metal should be compatible with the body fluid. Gold, being inert, is compatible with virtually all body fluids.

Carbon electrodes have been proposed for converting glucose to electric energy. It will be understood that carbon electrodes may be used in the apparatus of the present invention. In particular carbon electrodes having a microstructure or a nanostructure are particularly suitable.

The electrical conduits preferably are made of a material having a low ohmic resistance and a high flexibility. Metal wires and metal cables are suitable. Particularly suitable is gold, as it has a low ohmic resistance and a high flexibility. Suitably the electrical conduits are provided with a coat of insulating material.

The diameter of the electrical conduits should be such that the electrical energy can be conducted away from the electrodes without causing a significant temperature increase in the body tissues surrounding the conduits. In general, such temperature increase should not be more than 3 oC, preferably not more than 2 oC. Single-cell electrical generators of the type used herein generate a low voltage, on the order of 0.3 - 0.5 Volts. At such low voltages, significant amounts of electrical energy require high current intensities. It is desirable to use a large number of electrodes in series, so that the operating voltage of the combined electrodes becomes much higher. Because the electrodes can be miniaturized, even assemblies of a hundred or more electrodes are small enough to be placed in the body of a mammal without adverse effects.

Electrical energy can be transported wirelessly. The term "electrical conduit" as used herein encompasses arrangements for the wireless transportation of electrical energy.

In order for the apparatus to generate electricity, the electrodes must be placed in contact with a body fluid comprising one or more monosaccharides. An example of such a body fluid is blood, in particular blood flowing from the small intestine, where monosaccharides are resorbed from the digestive tract.

Another suitable body fluid is the fluid present in the digestive tract of the mammal, specifically in the small intestine, more specifically in the duodenum of the mammal.

Preferably, the body fluid comprises glucose.

The electricity generated by the apparatus may be sent to an electricity consuming device, for example an electricity consuming medical device. The medical device may be implanted in the body of the mammal.

In an alternate embodiment, the electricity is converted to heat inside the body of the mammal. The heat is dissipated by the body of the mammal, for example through the lungs, via the tongue, or by secretion of sweat. In this embodiment the apparatus increases the metabolism of the mammal, thus helping to prevent or alleviate obesity. Although the body of the mammal compensates by generating less heat through its ATP cycle, such processes are nowhere near 100% efficient; the net result is an increased consumption of food energy by the body of the animal.

In yet another embodiment electrical energy is transported to a location outside the body of the animal. Wireless transportation of electrical energy is particularly desirable in this embodiment, as it puts less limitation on the movements of the animal. Hard-wired conduits may be used in this embodiment as well, for example when the animal is asleep or otherwise more or less stationary.

The electricity may be used in any suitable manner.

Suitably, the apparatus may comprise a control means for controlling the electricity production of the electrodes. For example, the control means may operate to interrupt the production of electricity when the monosaccharide level of the body fluid drops below a predetermined threshold value.

The invention further relates to a method for converting carbohydrates in the body of a mammal to electric energy, said method comprising the steps of:
a) bringing a pair of electrodes into contact with a body fluid comprising one or more monosaccharides whereby the electrodes generate electricity;
**b)** conducting the electricity away from the electrodes by means of electrical conduits.

The invention further relates to a method for preventing or alleviating obesity in a mammal, said method comprising the steps of:
a) converting food energy to electric energy inside the body of the mammal;
**b)** dissipating or using the electric energy.

It will be understood that the term "mammal", as used herein, comprises humans. In particular the embodiment for controlling or reducing obesity is of importance for use by human beings.

The apparatus may also be used to prevent undesirable peaks in the glucose level in the blood stream. This may be done by placing the electrodes in the blood stream, whereby a controller instructs the apparatus to convert glucose to electric energy if the glucose level exceeds a certain threshold. This may also be done by placing the electrodes in the digestive tract, whereby a controller instructs the apparatus to convert glucose to electric energy if the glucose level in the digestive tract exceeds a certain threshold.

## Claims

1. An apparatus for converting carbohydrates in the body of a mammal, said apparatus comprising:
a) a pair of electrodes for placement in fluid contact with a body fluid comprising one or more monosaccharides;
b) electrical conduits for conducting electricity generated by said electrodes when in contact with said body fluid.

2. The apparatus of claim 1 wherein the body fluid is present in the digestive tract of the mammal.

3. The apparatus of claim 2 wherein the body fluid is present in the small intestine of the mammal.

4. The apparatus of claim 3 wherein the body fluid is present in the duodenum of the mammal.

5. The apparatus of any one of the preceding claims wherein said body fluid comprises glucose.

6. The apparatus of any one of the preceding claims further comprising an electricity consuming medical device.

7. The apparatus of claim 6 whereby the electricity consuming medical device is implanted in the body of the mammal.

8. The apparatus of any one of claims 1 - 5 wherein the electricity generated by said electrodes when in contact with the body fluid is transported to a location outside the body of the mammal.

9. The apparatus of claim 8 wherein the electricity is transported by said electrical conduits.

10. The apparatus of any one of the preceding claims further comprising a control means for controlling the electricity production of said electrodes.

11. The apparatus of claim 10 wherein the controller controls the electricity production such that no electricity is produced if the monosaccharide level of the body fluid is below a predetermined threshold value.

12. The apparatus of any one of the preceding claims when connected to a device for consuming electric power, said device being placed outside the body of the mammal.

13. The apparatus of any one of the preceding claims further comprising a data processing means for monitoring the electric energy produced by the apparatus.

14. The apparatus of claim 13 further comprising a memory means for storing data related to the electric energy produced by the apparatus.

15. The apparatus of claim 14 further comprising a means for displaying data related to the electric energy produced by the apparatus.

16. The apparatus of any one of claims 13 - 15 comprising a processor capable of comparing electric energy produced by the apparatus with the caloric value of food items.

17. The apparatus of claim 16 capable of displaying comparisons of the electric energy produced by the apparatus and the caloric value of food items.
